# FASCICULE DE BREVET EUROPEEN

(11) **EP 3 222 172 B1**
(45) Date de publication et mention de la délivrance du brevet: **13.03.2019**
(21) Numéro de dépôt: 17162398.6
(22) Date de dépôt: 22.03.2017
(51) Int. Cl.: A47H 27/00, A47G 7/04

(54) **ENSEMBLE POUR PLANTE COMPORTANT UN SUPPORT D'ACCROCHAGE ET UN RECIPIENT**
ANLAGE FÜR PFLANZE, DIE EINE BEFESTIGUNGSVORRICHTUNG UND EINEN BEHÄLTER UMFASST
ASSEMBLY FOR PLANT COMPRISING A HANGING MOUNTING AND A CONTAINER

(30) Priorité: 23.03.2016 FR 1652471
(43) Date de publication de la demande: 27.09.2017
(73) Titulaire: BOUILLARD, 71370 Saint Germain du Plain (FR)
(72) Inventeur: BOUILLARD, Victor, 71100 CHALON SUR SAONE (FR); BOUILLARD, Antoine, 71100 CHALON SUR SAONE (FR)
(74) Mandataire: Be IP

(56) Documents cités:
- EP-A1- 1 614 372
- JP-Y1- S4 533 230
- US-A- 2 530 456
- US-A- 5 575 447

## Description

### DOMAINE DE L'INVENTION

La présente invention concerne le domaine technique général des ensembles comprenant un récipient - tel qu'une jardinière ou un pot - et un support d'accrochage pour la suspension du récipient.

Plus précisément, la présente invention concerne un ensemble comprenant :
- Un récipient destiné à recevoir une composition florale, notamment en matière plastique, et
- un support de suspension, notamment en matière métallique.

Un tel ensemble peut par exemple être destiné à la décoration de balcons ou de terrasses.

### ARRIERE PLAN DE L'INVENTION

On a déjà proposé de nombreux ensembles composés d'un récipient - notamment parallélépipédique - et d'un support permettant à un utilisateur final de suspendre le récipient à un élément de mobilier tel qu'une rambarde de balcon.
Actuellement, la solidarisation du récipient à son support est réalisée :
- Soit par une pièce rapportée en matière plastique ou métallique clipsée sur un bord du récipient d'une part et sur le support d'autre part,
- Soit par des rubans adhésifs,
- Soit par cerclage.

Toutefois, ces différentes solutions ne sont pas satisfaisantes pour les raisons suivantes.

La solidarisation à l'aide d'une pièce rapportée nécessite de fabriquer, outre le récipient et le support, au moins une (généralement deux) pièce(s) rapportée(s) supplémentaire(s) (positionnées chacune sur un bord opposé du récipient dans le cas d'une pièce rapportée plastique, ou positionnées chacune sur l'arrière du récipient dans le cas d'une pièce rapportée métallique). Ceci induit un surcoût de production. En outre, la présence d'une (ou plusieurs) pièce(s) rapportée(s) supplémentaire(s) complexifie le montage et rend difficile son automatisation.

US 2 530 456 décrit un système de fixation de pot suspendu. Le pot comprend une bordure périphérique au niveau de son extrémité supérieure. Le système de fixation comprend quant à lui une tige destinée à encercler le pot sur laquelle sont montées des becs élastiquement déformables. Ces becs forment des éléments de retenu qui ont pour fonction de bloquer la tige contre la bordure du pot.

Tout comme pour la solidarisation à l'aide d'une pièce, la solidarisation à l'aide de becs disposés sur la tige du système de fixation complexifie le montage et rend difficile son automatisation, les becs devant être assemblés sur la tige 16 après avoir été fabriqués, ce qui induit un surcoût de production.

La solidarisation à l'aide de ruban adhésif peut altérer l'aspect extérieur de l'ensemble, notamment en laissant apparaitre des traces de colle sur le récipient et/ou son support. En outre, la solidarisation à l'aide de ruban adhésif est susceptible de se détériorer au cours du temps, notamment lorsque l'ensemble est soumis aux contraintes d'un environnement extérieur (soleil, pluie, gel, moisissure...etc.).

Enfin, la solidarisation par cerclage empêche l'empilage des ensembles, ce qui augmente le volume nécessaire au transport et au stockage de ces ensembles, et donc les coûts associés à ces opérations de transport et de stockage.

Un but de la présente invention est de proposer un ensemble permettant de pallier au moins l'un des inconvénients précités.

Plus précisément, un but de la présente invention est de proposer un ensemble présentant des avantages pour l'utilisateur final d'une part, et pour les personnels impliqués dans les opérations de fabrication, de transport et de vente d'autre part.

En particulier l'invention vise à proposer à l'utilisateur final, un ensemble dont les moyens de solidarisation du récipient au support de suspension :
- ne génèrent pas de défaut d'aspect, et
- permettent de fixer le récipient au support de manière fiable afin de limiter les risques de désassemblage intempestif du récipient et du support de suspension, notamment en cas de vent violent.

L'invention vise également à proposer aux personnels impliqués dans les opérations de fabrication, de transport et de vente, un ensemble dont les moyens de solidarisation du récipient au support de suspension :
- ne nécessitent pas de pièce additionnelle,
- permettent un assemblage automatisé du récipient à son support,
- n'empêchent pas l'empilement de plusieurs récipients, et
- garantissent une fiabilité de fixation du récipient au support afin de limiter les risques de détachement intempestif du récipient et du support de suspension, notamment lors de leur manipulation.

### BREVE DESCRIPTION DE L'INVENTION

A cet effet, l'invention propose un ensemble pour plante du type comprenant
- un récipient comportant un fond, une ouverture opposée au fond, et au moins une paroi latérale incluant un rebord périphérique supérieur s'étendant dans le plan de l'ouverture du récipient,
- un support d'accrochage comportant une armature destinée à entourer ladite et au moins une paroi latérale du récipient,
remarquable en ce que le récipient comporte en outre au moins un élément de retenu solidaire de la paroi latérale du récipient pour bloquer l'armature contre le rebord du récipient, le récipient et l'élément de retenu étant d'un seul bloc

Des aspects préférés mais non limitatifs de l'ensemble selon l'invention sont les suivants :
- l'élément de retenu est mobile en rotation par rapport à la paroi latérale entre :
   ∘ une position déployée où l'élément de retenu s'étend sensiblement dans le plan de l'ouverture du récipient, et
   ∘ une position repliée où l'élément de retenu s'étend sensiblement parallèlement à la paroi latérale du récipient ;
- l'élément de retenu comprend une languette flexible, la languette étant reliée à la paroi latérale du récipient par l'intermédiaire d'une zone charnière ;
- la languette comprend un corps principal, la zone charnière à l'une des extrémités du corps principal, et un ergot à l'autre extrémité du corps principal, ledit ergot étant destiné à recevoir l'armature du support d'accrochage ;
- l'épaisseur de la zone charnière est inférieure à l'épaisseur du corps principal de sorte à favoriser la rotation de la languette autour de la zone charnière ;
- l'ergot comprend un logement en forme de « C » destiné à recevoir l'armature ;
- le logement est relié d'une part au corps principal et d'autre part à une paroi inclinée ;
- l'élément de retenu comprend un bossage intégré à la paroi latérale du récipient et s'étendant en saillie vers l'extérieur du récipient, le rebord et le bossage définissant une gorge destinée à recevoir l'armature du support d'accrochage ;
- le bossage comprend :
   ∘ une face horizontale s'étendant dans un plan parallèle au fond du récipient,
   ∘ une face inclinée.

### BREVE DESCRIPTION DES DESSINS

D'autres avantages et caractéristiques de l'ensemble selon l'invention ressortiront mieux de la description qui va suivre de plusieurs variantes d'exécution, données à titre d'exemples non limitatifs, à partir des dessins annexés sur lesquels :
- Les figures 1 à 5 illustrent différentes vues d'un premier mode de réalisation d'un ensemble pour plante,
- La figure 6 est une vue en coupe longitudinale d'un deuxième mode de réalisation de l'ensemble pour plante,
- La figure 7 illustre plusieurs ensembles pour plante empilés,
- La figure 8 est une vue de côté d'un autre mode de réalisation d'un ensemble pour plante.

### DESCRIPTION DETAILLEE DE L'INVENTION

On va maintenant décrire différents exemples d'ensemble pour plante selon l'invention. Dans ces différentes figures, les éléments équivalents sont désignés par la même référence numérique.

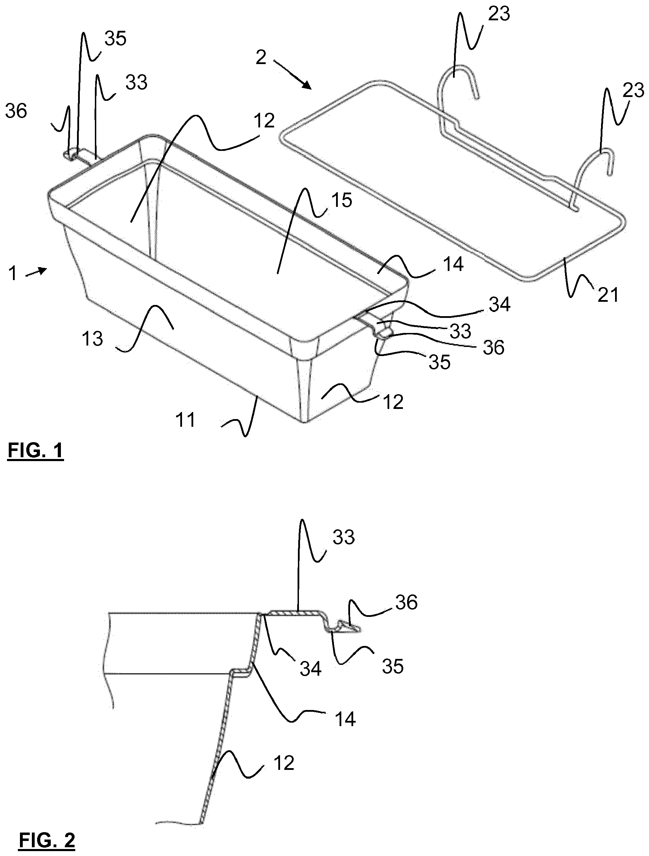

En référence à la figure 1, on a illustré un mode de réalisation de l'ensemble pour plante selon l'invention. Cet ensemble comprend un récipient 1 et un support d'accrochage 2.

### 1. Support d'accrochage

Le support d'accrochage 2 permet de suspendre l'ensemble pour plante à un élément de mobilier tel qu'une rambarde de balcon.

Le support d'accrochage comporte une armature 21 destinée à être positionnée autour de la (ou des) face(s) latérale(s) du récipient. L'armature 21 s'étend sensiblement dans un plan. Elle est par exemple constituée d'une (ou plusieurs) tige(s) métallique(s) de section circulaire ou carrée.

La forme de l'armature 21 est avantageusement complémentaire de la forme en section transversale du récipient 1. Par exemple dans le mode de réalisation illustré à la figure 1, l'armature 21 est de forme rectangulaire. Bien entendu, l'armature 21 peut présenter une autre forme. Par exemple, si le récipient 1 est un pot de forme globale tronconique, l'armature 21 peut être de forme circulaire.

Le support d'accrochage 2 comprend également deux crochets 22, 23 destinés à s'engager sur l'élément de mobilier. La présence de deux crochets 22, 23 permet d'assurer un positionnement sensiblement horizontal suivant l'élément mobilier de l'ensemble pour plante lors de sa suspension.

Les crochets 22, 23 s'étendent l'un à l'autre dans des plans perpendiculaires au plan de l'armature 21. Dans le mode de réalisation illustré à la figure 1, les crochets sont 22, 23 fixés sur une tige de plus grande dimension de l'armature 21.

Le matériau constituant les crochets 22, 23 est de préférence du métal. Chaque crochet 22, 23 peut être de section circulaire ou carré. Chaque crochet inclut une partie droite 22 destinée à s'étendant le long de la paroi latérale du récipient 1 et une partie arrondie 23 s'étendant en saillie vers l'extérieur de l'armature 21, et destinée à coopérer avec l'élément de mobilier.

### 2. Récipient

Le récipient 1 est destiné à recevoir de la terre et des plantes constituant une composition florale décorative.

Le récipient 1 peut être en plastique injecté ou dans tout autre matériau connu de l'homme de l'art. Il peut présenter différentes formes (tronconique, cylindrique, cubique, etc.) en fonction de l'application visée.

Dans le mode de réalisation illustré à la figure 1, le récipient 1 est de forme générale parallélépipédique et se compose d'un fond 11, de deux parois transversales 12 et de deux parois longitudinales 13. Ces parois 12, 13, qui vont en s'évasant vers le haut, sont ceinturées par un rebord 14 s'étendant autour du récipient 1 au niveau de son ouverture supérieure 15.

Le récipient 1 comprend également un (ou plusieurs) élément(s) de retenu 3 permettant de fixer le support d'accrochage 2 au récipient 1. De préférence, le récipient 1 comprend deux éléments de retenu 3 intégrés à deux parois latérales opposées du récipient (parois latérales 12 ou longitudinales 13).

Ces moyens de retenu 3, qui seront décrits plus en détails dans la suite, permettent de plaquer l'armature 21 du support d'accrochage 2 contre le rebord 14 du récipient 1.

### 3. Elément de retenu

### 3.1 Bossage

Les éléments de retenu peuvent être de différentes formes.

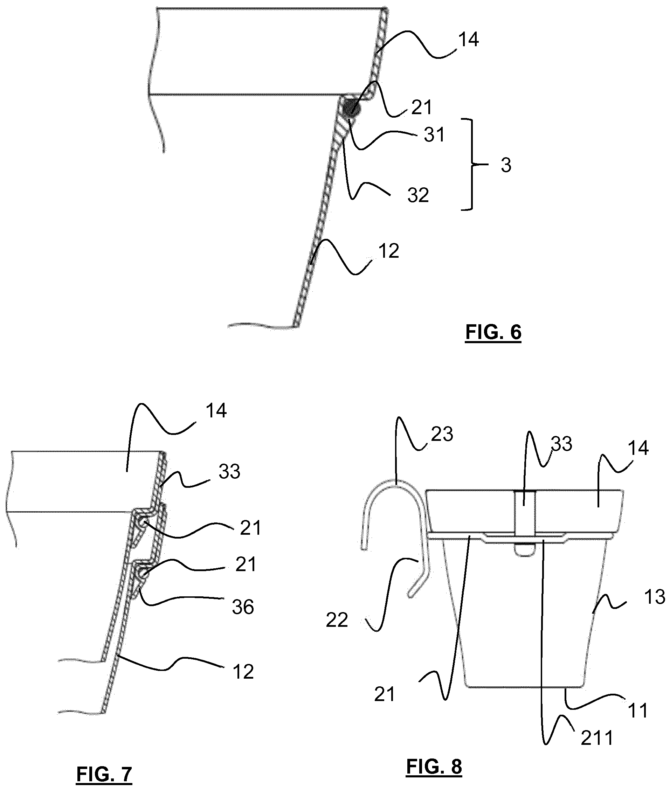

Par exemple, dans le mode de réalisation illustré à la figure 6, chaque élément de retenu 3 consiste en un bossage intégré à la paroi transversal 12 du récipient 1. Le bossage s'étend en saillie vers l'extérieur du récipient 1.

Le rebord 14 du récipient et le bossage définissent une gorge destinée à recevoir l'armature 21. Le bossage comprend une face horizontale 31 s'étendant dans un plan sensiblement parallèle au fond 11 du récipient 1. Il comprend également une face inclinée 32 pour faciliter l'emmanchement en force de l'armature 21 dans la gorge.

Avantageusement, la distance entre le bossage et le rebord 14 est sensiblement égale au diamètre de l'armature 21 de sorte à plaquer celle-ci contre le rebord 14 lorsque le support 2 est assemblé au récipient 1 pour former l'ensemble pour plante.

### 3.2 Languettes

Pour faciliter la fabrication par moulage du récipient 1, chaque élément de retenu 3 peut être monté pivotant sur le récipient 1 entre :
- une position déployée où l'élément de retenu 3 s'étend sensiblement dans le plan de l'ouverture 15 du récipient 1 et
- une position repliée où l'élément de retenu 3 s'étend sensiblement parallèlement à la paroi latérale sur laquelle ledit élément de retenu est intégré.

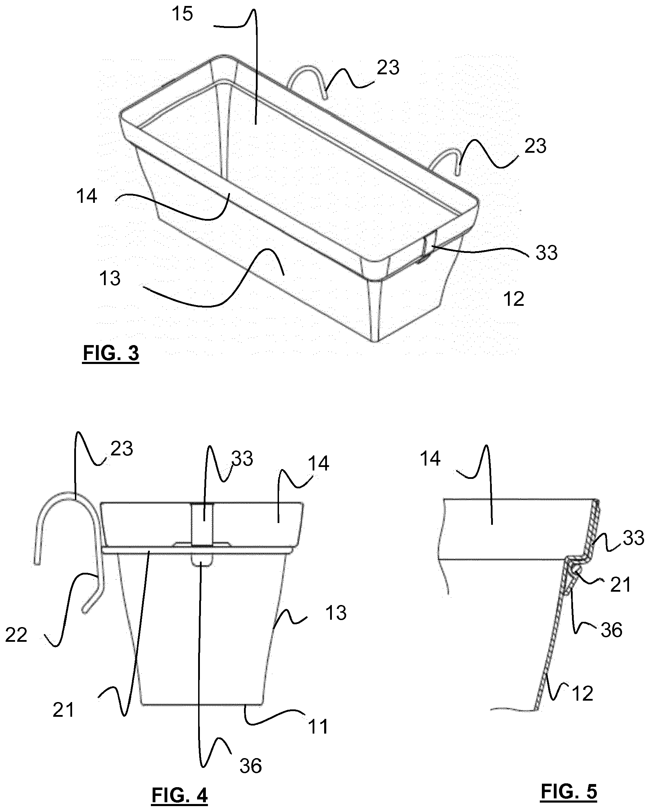

Dans ce cas, la position déployée (figures 1 et 2) correspond à la position de moulage du récipient 1 incluant l'élément de retenu 3, et la position repliée (figures 3 à 5) correspond à la position d'assemblage du support d'accrochage 2 sur le récipient 1.

Ainsi, les éléments de retenu 3 sont moulés dans un plan de joint de démoulage du récipient 1. Ce plan de joint correspond à la zone de jonction entre les parties mâle et femelle du moule permettant la fabrication du récipient 1. Ceci permet de fabriquer un récipient 1 incluant des éléments de retenu 3 avec un moule le plus simple possible afin de limiter les coûts d'investissement de l'ensemble pour plante.

Dans le mode de réalisation illustré aux figures 1 à 5, l'élément de retenu 3 consiste en une languette flexible fixé par une première extrémité à la paroi transversale 12 du récipient 1. Cette languette est de préférence réalisée en plastique injectée.

Elle comprend :
- un corps principal 33,
- une zone charnière 34 entre le corps principal 33 et le récipient 1, et
- un ergot formant buté destiné à recevoir l'armature 21 du support d'accrochage 2.

Le corps principal 33 est sensiblement plan, et de forme générale rectangulaire. La longueur du corps principal 33 est sensiblement égale à la hauteur du rebord 14 de récipient 1 sur lequel le corps principal 33 est destiné à venir en appui lorsque le support d'accrochage 2 et le récipient 1 sont assemblés. Avantageusement, l'épaisseur et la largeur du corps principal 33 sont prévues suffisantes pour garantir la rigidité de la languette.

La zone charnière 34 consiste en une nervure ménagée à l'extrémité du corps principal 33. L'épaisseur de la zone charnière 34 est inférieure à l'épaisseur du corps principal 33 de sorte à garantir le pivotement de la languette au niveau de la zone charnière 34 lorsqu'une force d'appui est exercée sur la languette pour déplacer celle-ci entre les positions déployée et repliée.

L'ergot s'étend à l'extrémité libre du corps principal 33. Il comprend un logement 35 en forme de « C » destiné à recevoir la tige formant armature 21 du support d'accrochage 2. Ce logement 35 est relié par l'une de ses extrémités au corps principal 33 et par son autre extrémité à une paroi inclinée 36 destinée à venir en contact avec la paroi transversal 12 au niveau de son extrémité libre lorsque l'élément de retenu 3 est dans la position repliée. Cette paroi inclinée 36 permet de faciliter l'emmanchement en force de l'armature 21 dans le logement 35.

La présence du logement 35 en forme de « C » permet de plaquer l'armature 21 du support d'accrochage 2 contre le rebord 14 du récipient 1. La présence de la paroi inclinée 36 permet quant à elle de faciliter l'insertion de l'armature 21 dans le logement 35 en forme de « C » par déformation élastique.

### 4. Procédé d'assemblage

On va maintenant décrire plus en détails un exemple de procédé d'assemblage de l'ensemble pour plante incluant le support d'accrochage 2 et le récipient 1.

On suppose que le récipient 1 a été fabriqué par injection de plastique dans un moule comportant une partie mâle et une partie femelle qui une fois montées l'une sur l'autre définissent un espace libre correspondant à la forme finale du récipient 1. Après injection du plastique dans le moule, les parties mâle et femelle sont démontées pour permettre l'extraction du récipient. On obtient le récipient 1 tel qu'illustré à la figure 1 incluant deux languettes de fixation solidaires des parois latérales 12 et s'étendant vers l'extérieur du récipient 1 parallèlement au fond 11 de celui-ci.

Dans une étape du procédé d'assemblage, les languettes de fixation sont déplacées par pivotement de la position déployée vers la position repliée.

Ce déplacement de chaque languette peut être induit par l'application d'une force d'appui sur le corps principal 33 de sorte à plier celle-ci au niveau de la zone charnière 34. Le déplacement de la languette induit :
- le placage du corps principal 33 contre le rebord 14 du récipient 1,
- le placage du logement 35 en forme de « C » contre la paroi transversale 12 du récipient 1, et
- la mise en contact de la paroi inclinée 36 avec la paroi transversale 12 du récipient 1 au niveau de son extrémité libre.

Dans une autre étape, le récipient 1 est positionné dans l'armature 21 du support d'accrochage 2.

Le support d'accrochage 21 est déplacé en translation (selon une direction allant du fond 11 vers l'ouverture 15 du récipient 1) le long des parois latérales 12, 13 du récipient 1, jusqu'à venir en contact avec les parois inclinées des languettes.

L'armature 21 est ensuite emmanchée en force dans le logement 35. Le coulissement de l'armature 21 le long des parois inclinées induit une déformation élastique de l'armature 21 et/ou des parois inclinées. L'armature 21 se déplace relativement au récipient 1 jusqu'à encliquetage de l'armature 21 dans les logements 35 des languettes.

Le support d'accrochage 2 est alors en place. Les languettes assurent le placage du support 2 contre le rebord 14 du récipient 1.

L'ensemble pour plante ainsi obtenu composé du récipient 1 et de son support 2 peut être empilé sur d'autres ensembles préalablement assemblés, comme illustré à la figure 7.

Le lecteur aura compris que de nombreuses modifications peuvent être apportées à l'invention décrite précédemment sans sortir matériellement des nouveaux enseignements et des avantages décrits ici.

Par exemple, dans le premier mode de réalisation, la distance entre le bossage et le rebord était prévue sensiblement égale au diamètre de l'armature pour garantir le placage de celle-ci contre le rebord. Il est bien évident pour l'homme du métier que cette distance pourrait être supérieure au diamètre de l'armature de sorte à autoriser un mouvement de l'armature à l'intérieur de la gorge sans lui permettre de se désengager du récipient.

Egalement dans les variantes décrites précédemment, l'armature du support s'étendait sensiblement dans un plan et présentait une forme complémentaire de celle du récipient (i.e. rectangulaire dans le cas d'un récipient parallélépipédique, circulaire dans le cas d'un récipient tronconique, etc.). Il est bien évident pour l'homme du métier que l'invention ne se limite pas à la solidarisation d'un récipient à un support ayant une armature s'étendant dans un plan. En effet, l'armature peut comprendre un (ou plusieurs) décrochement(s) ou tout autre élément décoratif supposé améliorer l'esthétique de l'ensemble pour plante. Par exemple, dans le mode de réalisation illustré à la figure 8, la tige métallique constituant l'armature comprend des décrochements 211 en forme de créneau dans les zones de l'armature destinées à coopérer avec les éléments de retenu 3.

Par conséquent, toutes les modifications de ce type sont destinées à être incorporées à l'intérieur de la portée des revendications jointes.

## Revendications

1. Ensemble pour plante du type comprenant
∘ un récipient (1) comportant un fond (11), une ouverture (15) opposée au fond (11), et au moins une paroi latérale (12, 13) incluant un rebord (14) périphérique supérieur s'étendant dans le plan de l'ouverture (15) du récipient (1),
∘ un support d'accrochage (2) comportant une armature (21) destinée à entourer ladite et au moins une paroi latérale (12, 13) du récipient (1),
**caractérisé en ce que** le récipient (1) comporte en outre au moins un élément de retenu (3) solidaire de la paroi latérale (12, 13) du récipient (1) pour plaquer l'armature (21) contre le rebord (14) du récipient (1), le récipient (1) et l'élément de retenu (3) étant d'un seul bloc.

2. Ensemble pour plante selon la revendication 1, dans lequel l'élément de retenu (3) est mobile en rotation par rapport à la paroi latérale entre :
∘ une position déployée où l'élément de retenu (3) s'étend sensiblement dans le plan de l'ouverture (15) du récipient (1), et
∘ une position repliée où l'élément de retenu (3) s'étend sensiblement parallèlement à la paroi latérale (12, 13) du récipient (1).

3. Ensemble pour plante selon l'une quelconque des revendications 1 ou 2, dans lequel l'élément de retenu (3) comprend une languette flexible, la languette étant reliée à la paroi latérale (12, 13) du récipient (1) par l'intermédiaire d'une zone charnière (34).

4. Ensemble pour plante selon la revendication 3, dans lequel la languette comprend un corps principal (33), la zone charnière (34) à l'une des extrémités du corps principal (33), et un ergot à l'autre extrémité du corps principal, ledit ergot étant destiné à recevoir l'armature (21) du support d'accrochage (2).

5. Ensemble pour plante selon la revendication 4, dans lequel l'épaisseur de la zone charnière (34) est inférieure à l'épaisseur du corps principal (33) de sorte à favoriser la rotation de la languette autour de la zone charnière (34).

6. Ensemble pour plante selon l'une quelconque des revendications 4 ou 5, dans lequel l'ergot comprend un logement (35) en forme de « C » destiné à recevoir l'armature (21).

7. Ensemble pour plante selon la revendication 6, dans lequel le logement (35) est relié d'une part au corps principal (33) et d'autre part à une paroi inclinée (36).

8. Ensemble pour plante selon la revendication 1, dans lequel l'élément de retenu (3) comprend un bossage intégré à la paroi latérale (12, 13) du récipient (1) et s'étendant en saillie vers l'extérieur du récipient (1), le rebord (14) et le bossage définissant une gorge destinée à recevoir l'armature (21) du support d'accrochage (2).

9. Ensemble pour plante selon la revendication 8, dans lequel le bossage comprend :
∘ une face horizontale (31) s'étendant dans un plan parallèle au fond (11) du récipient (1),
∘ une face inclinée (32).

## Patentansprüche

1. Set für eine Pflanze vom Typ, der Folgendes umfasst:
∘ einen Behälter (1) umfassend einen Boden (11), eine dem Boden (11) entgegengesetzte Öffnung (15) und zumindest eine Seitenwand (12, 13) mit einem umlaufenden oberen Rand (14), der sich in der Ebene der Öffnung (15) des Behälters (1) erstreckt,
∘ eine Halterung (2), die eine Bewehrung (21) umfasst, die dazu bestimmt ist, die und zumindest eine Seitenwand (12, 13) des Behälters (1) zu umgeben,
**dadurch gekennzeichnet, dass** der Behälter (1) ferner zumindest ein mit der Seitenwand (12, 13) des Behälters (1) fest verbundenes Halteelement (3) zum Andrücken der Bewehrung (21) an den Rand (14) des Behälters (1) umfasst, wobei der Behälter (1) und das Halteelement (3) aus einem Stück bestehen.

2. Set für eine Pflanze nach Anspruch 1, wobei das Halteelement (3) gegenüber der Seitenwand drehbar beweglich ist zwischen:
∘ einer ausgefahrenen Stellung, in der sich das Halteelement (3) im Wesentlichen in der Ebene der Öffnung (15) des Behälters (1) erstreckt, und
∘ einer eingezogenen Stellung, in der sich das Halteelement (3) im Wesentlichen parallel zur Seitenwand (12, 13) des Behälters (1) erstreckt.

3. Set für eine Pflanze nach einem der Ansprüche 1 oder 2, wobei das Halteelement (3) eine flexible Lasche umfasst, wobei die Lasche über einen Scharnierbereich (34) mit der Seitenwand (12, 13) des Behälters (1) verbunden ist.

4. Set für eine Pflanze nach Anspruch 3, wobei die Lasche einen Hauptkörper (33), den Scharnierbereich (34) an einem Ende des Hauptkörpers (33) und einen Stift am anderen Ende des Hauptkörpers umfasst, wobei der Stift zur Aufnahme der Bewehrung (21) der Halterung (2) bestimmt ist.

5. Set für eine Pflanze nach Anspruch 4, wobei die Dicke des Scharnierbereichs (34) geringer ist als die Dicke des Hauptkörpers (33), um die Drehung der Lasche um den Scharnierbereich (34) zu begünstigen.

6. Set für eine Pflanze nach einem der Ansprüche 4 oder 5, wobei der Stift ein "C"-förmiges Gehäuse (35) zur Aufnahme der Bewehrung (21) umfasst.

7. Set für eine Pflanze nach Anspruch 6, wobei das Gehäuse (35) einerseits mit dem Hauptkörper (33) und andererseits mit einer geneigten Wand (36) verbunden ist.

8. Set für eine Pflanze nach Anspruch 1, wobei das Halteelement (3) einen in die Seitenwand (12, 13) des Behälters (1) integrierten und vom Behälter (1) nach außen ragenden Vorsprung umfasst, wobei der Rand (14) und der Vorsprung eine Nut zur Aufnahme der Bewehrung (21) der Halterung (2) definieren.

9. Set für eine Pflanze nach Anspruch 8, wobei der Vorsprung Folgendes umfasst:
∘ eine horizontale Fläche (31), die sich in einer Ebene parallel zum Boden (11) des Behälters (1) erstreckt,
∘ eine geneigte Fläche (32).

## Claims

1. A plant unit of the type comprising
∘ a container (1) including a bottom (11), an opening (15) opposite the bottom (11), and at least one lateral wall (12, 13) including a peripheral upper edge (14) extending in the plane of the opening (15) of the container (1),
∘ a mounting bracket (2) including a frame (21) designed to surround said and at least one lateral wall (12, 13) of the container (1),
**characterized in that** the container (1) further comprises at least one retaining element (3) integral with the lateral wall (12, 13) of the container (1) to press the frame (21) against the edge (14) of the container (1), the container (1) and the retaining element (3) consisting of a single unit.

2. The plant unit according to claim 1, wherein the retaining element (3) is movable in rotation with respect to the lateral wall between:
∘ a deployed position where the retaining element (3) extends substantially in the plane of the opening (15) of the container (1), and
∘ a retracted position where the retaining element (3) extends substantially parallel to the lateral wall (12, 13) of the container (1).

3. The plant unit according to any one of claims 1 or 2, wherein the retaining element (3) comprises a flexible strip, the strip being connected to the lateral wall (12, 13) of the container (1) by means of a hinge zone (34).

4. The plant unit according to claim 3, wherein the strip comprises a main body (33), the hinge zone (34) at one of the ends of the main body (33) and a lug at the other end of the main body, said lug being designed to receive the frame (21) of the mounting bracket (2).

5. The plant unit according to claim 4, wherein the thickness of the hinge zone (34) is less than the thickness of the main body (33) such as to promote the rotation of the strip around the hinge zone (34).

6. The plant unit according to any one of claims 4 or 5, wherein the lug comprises a "C" shaped recess (35) designed to receive the frame (21).

7. The plant unit according to claim 6, wherein the recess (35) is connected on the one hand to the main body (33) and on the other hand to an inclined wall (36).

8. The plant unit according to claim 1, wherein the retaining element (3) comprises a bulge integrated into the lateral wall (12, 13) of the container (1) and extending in protrusion toward the exterior of the container (1), the edge (14) and the bulge defining a groove designed to receive the frame (21) of the mounting bracket (2).

9. The plant unit according to claim 8, wherein the bulge comprises:
∘ a horizontal face (31) extending in a plane parallel to the bottom (11) of the container (1),
∘ an inclined face (32).
